# FASCICULE DE BREVET EUROPEEN

(11) **EP 1 390 803 B1**
(45) Date de publication et mention de la délivrance du brevet: **08.02.2006**
(21) Numéro de dépôt: 02747490.7
(22) Date de dépôt: 29.05.2002
(51) Int. Cl.: G02F 1/153

(54) **STRUCTURE ELECTROCHROME SOUPLE ET PROCEDES DE FABRICATION DE CETTE STRUCTURE**
BIEGSAME ELEKTROCHROME STRUKTUR UND VERFAHREN ZU DEREN HERSTELLUNG
FLEXIBLE ELECTROCHROME STRUCTURE AND METHODS FOR THE PRODUCTION THEREOF

(30) Priorité: 31.05.2001 FR 0107144
(43) Date de publication de la demande: 25.02.2004
(73) Titulaire: COMMISSARIAT A L'ENERGIE ATOMIQUE, 75752 Paris 15ème (FR)
(72) Inventeur: HOURQUEBIE, Patrick, F-37320 Esvres (FR); TOPART, Patrice, Sillery, Québec G1S 1J7 (CA); PAGES, Hubert, F-37000 Tours (FR)
(74) Mandataire: Ilgart, Jean-Christophe
(86) Numéro de dépôt international: PCT/FR2002/001807
(87) Numéro de publication internationale: WO 2002/097519

(56) Documents cités:
- US-A- 3 844 636
- US-A- 3 944 333
- US-A- 5 995 273
- US-B1- 6 194 072
- HALE J S ET AL: "Visible and infrared optical constants of electrochromic materials for emissivity modulation applications" THIN SOLID FILMS, ELSEVIER-SEQUOIA S.A. LAUSANNE, CH, vol. 313-314, 1 février 1998 (1998-02-01), pages 205-209, XP004131630 ISSN: 0040-6090 cité dans la demande
- PATENT ABSTRACTS OF JAPAN vol. 015, no. 226 (P-1213), 10 juin 1991 (1991-06-10) & JP 03 067227 A (TONEN CORP), 22 mars 1991 (1991-03-22) -& JP 03 067227 A 22 mars 1991 (1991-03-22)

## Description

### Domaine technique de l'invention

La présente invention se rapporte à une structure électrochrome souple. Elle se rapporte également à des procédés de fabrication de cette structure.

Les structures électrochromes de la présente invention sont des systèmes à réflexion modulable fonctionnant dans un large domaine spectral allant du visible au moyen infrarouge, c'est à dire à des longueurs d'onde comprises entre 0,35 et 20 µm.

Elles trouvent donc de nombreuses applications. Par exemple, ces structures sont de bons afficheurs souples fonctionnant à la fois dans les domaines visible et infrarouge. Elles trouvent également leur place notamment dans le domaine de l'aérospatial en permettant de contrôler les échanges thermiques sur des objets spatiaux tels que les satellites.

### Art antérieur

L'électrochromisme consiste à modifier les propriétés optiques d'un matériau sous l'influence d'un potentiel électrique. Les structures électrochromes permettent d'exploiter l'électrochromisme notamment dans les applications précitées.

Globalement, les structures électrochromes peuvent se scinder en deux types : les structures électrochromes fonctionnant en transmission et celles fonctionnant en réflexion.

Dans un dispositif fonctionnant en transmission, le rayonnement incident traverse le dispositif dans sa totalité et est atténué de façon modulable. Dans un dispositif fonctionnant en réflexion, le dispositif est d'abord opaque, c'est à dire qu'aucun rayonnement ne le traverse, le rayonnement incident est alors réfléchi de façon modulable.

La présente invention concerne les structures du deuxième type.

Le document WO-A-94/16356 de R. Bennett expose deux types de dispositifs électrochromes à réflexion modulable. Dans le premier type de dispositif, la couche électrochrome se situe sur l'électrode métallique, mais vers l'extérieur du dispositif. Elle est donc hors du champ électrique créé par les deux électrodes. Afin de permettre la compensation de charge dans la couche électrochrome lors des processus électrochimiques, un substrat poreux métallisé et imprégné d'électrolyte est utilisé. Le premier dispositif proposé est dissymétrique, et le substrat de la contre électrode se trouvant à l'arrière du dispositif. Dans le deuxième dispositif proposé, le dispositif est symétrique : le substrat poreux central sert de support à l'électrode de travail et à la contre électrode. Le dispositif peut donc fonctionner sur les deux faces.

Dans ce document il est déclaré que le système fonctionne sur tout le domaine spectral, infrarouge compris. Cependant, pour les deux assemblages décrits, la position de l'électrolyte devant le matériau actif et la couche réflectrice impliquerai pour cela de trouver un électrolyte qui soit transparent dans le domaine infrarouge. Or, ceci n'est pas possible, les électrolytes liquides ou solides étant, par leurs bandes de vibration, absorbantes dans le domaine du moyen infrarouge. Les deux assemblages proposés ne sont donc pas applicables pour une utilisation dans l'infrarouge.

Des systèmes électrochromes infrarouges à base d'oxyde de tungstène WO₃ ont récemment été réalisés. Un exemple d'un tel système est décrit par exemple dans J.S. Hale, M. DeVries, B. Dworak and J.A. Woollam, Thin Solid Films 313-314, 205-209 (1998). Le dispositif proposé, basé sur la variation d'indices optiques du WO₃ par dopage électrochimique, présente cependant l'inconvénient d'être rigide, et ne peut malheureusement pas être rendu souple par remplacement des substrats utilisés par des polymères. La conception du dispositif reste classique, puisque les matériaux électrochromes et de contre-électrode restent dans le champ électrique créé par les deux électrodes. Une grille d'or est utilisée comme électrode du WO₃ afin d'être transparente au rayonnement infrarouge. Le dispositif a donc un fonctionnement dans lequel le matériau actif (WO₃) montre un contraste en réflectance. En outre, il est à noter que les contrastes obtenus dans le domaine du moyen infrarouge restent trop faibles.

Un dispositif similaire, dans lequel le trioxyde de tungstène est remplacé par un polymère conducteur, la polyaniline, a été proposé dans le document P. Topart and P. Hourquebie, Thin Solid Films, 352, 243-248 (1999). Cependant, le dispositif reste rigide et basé sur une conception classique de type batteries, où le matériau actif reste dans le champ électrique.

Le document US 5,995,273 de P. Chandrasekhar décrit un dispositif permettant un contraste en absorbance d'une couche de polymère conducteur lors de son processus électrochimique de dopage/dédopage. Le polymère conducteur est déposé sur un substrat poreux métallisé qui joue à la fois les rôles d'électrode, de réflecteur et de conducteur ionique. Deux conceptions du système sont proposées. Dans les deux cas, comme dans le cas du brevet de Bennett cité ci-dessus, la couche active de polymère conducteur se trouve hors du champ électrique créé par les deux électrodes. Le substrat poreux imprégné d'électrolyte permet alors la conductivité ionique entre les deux couches électroactives. La première conception proposée par P. Chandrasekhar est très proche de celle de R. Bennett avec un film de PE en contact intime avec une couche de polymère conducteur. Dans la deuxième conception de dispositif proposée, la contre-électrode n'est plus, comme dans la première, parallèle à l'électrode optiquement active, mais elle est enroulée et située de chaque coté du système.

Cependant la réalisation des structures proposées est difficile et complexe. En outre l'épaisseur de ces structures est trop importante.

Le document US 6 194 072 décrit un dispositif éléctrochrome flexible dans lequel une membrane d'échange de protons est placée entre deux électrodes et une couche de polymère électrochrome est déposée en contact avec l'une des électrodes.

### Exposé de l'invention

La présente invention pallie les inconvénients précités de l'art antérieur, en fournissant une structure électrochrome souple fonctionnant en réflexion à des longueurs d'onde comprises entre 0,35 et 20 µm.

La structure électrochrome de la présente invention comprend une membrane microporeuse incluant un électrolyte et, déposées sur chacune des surfaces de la membrane microporeuse, de manière symétrique par rapport à ladite membrane, successivement et dans cet ordre : une électrode formée d'une couche conductrice électronique et réfléchissante, une couche de polymère conducteur électrochrome, et une fenêtre souple et transparente à des longueurs d'onde comprises entre 0,35 et 20 µm.

Le principe de base des structures de la présente invention est donc la symétrie totale de la structure, les deux faces de la structure présentant les mêmes propriétés électrochromes.

Selon un mode particulier de réalisation de la structure électrochrome de la présente invention, la membrane microporeuse peut être constituée d'une première et d'une deuxième membranes microporeuses assemblées surface contre surface. Ce mode de réalisation est décrit ci-dessous en relation avec les procédés de la présente invention et dans les exemples.

La membrane microporeuse est constituée d'un ou de plusieurs matériau(s) choisi(s) en fonction des différents éléments qui constituent la structure électrochrome. Par exemple, lorsque la couche formant une électrode réfléchissante est une couche de métal, la membrane microporeuse est de préférence constituée d'un matériau qui peut être métallisé. De préférence, le matériau est compatible avec le polymère conducteur et l'électrolyte, il présente une tenue mécanique suffisante lui permettant de jouer un rôle de substrat, et il possède une résistance thermique lui permettant de résister aux températures auxquelles il peut être soumis lors de la fabrication de la structure, par exemple à des températures proches de 100°C sous pression. En outre, sa porosité permet à l'électrolyte qui y est introduit de présenter une conductivité ionique suffisante. Par ailleurs, une fois métallisé, il présente une réflectance spéculaire élevée. Pour cela, le diamètre des pores est avantageusement choisi de façon à rester nettement inférieur à la longueur d'onde du rayonnement que l'on veut réfléchir. Il est à noter qu'en modifiant la taille des pores de la membrane microporeuse, il est possible de contrôler les parts spéculaire et diffuse du rayonnement réfléchi.

Nombre de polymères peuvent répondre aux spécifications précités, à savoir, des films polymères de toute sorte perforés mécaniquement ou par ablation laser, les tissus, etc... Selon l'invention, la membrane microporeuse peut être constituée par exemple d'un ou de plusieurs des matériaux suivants : un poly(propylène), un poly(éthylène téréphtalate), un poly(méthylméthacrylate), un poly(éthylméthacrylate), un polytétrafluoroéthylène et autres poly(alkylènes) fluorés en C1 à C8, un polyamide, un poly(fluorure de vinylidène), une résine acrylique tel qu'une résine synthétique de méthylméthacrylate, une résine synthétique d'acrylate, et un polymère de type poly(méthylméthacrylate), un copolymère d'acrylate de méthyle et d'acrylonitrile, un acétate d'éthylène vinyle, une résine éthylène propylène fluorée, un polyester, un polycarbonate, un polybutylène, un poly(chlorure de vinyle), un polyuréthane, un polyimide, un textile tissé ou non tissé poreux, un papier, et un papier filtre, une membrane de microfiltration.

Avantageusement, la membrane microporeuse peut être une membrane en polyamide, polyester, polycarbonate ou poly(fluorure de vinylidène).

Les inventeurs ont obtenu de très bons résultats avec des membranes microporeuses habituellement utilisées pour la microfiltration. Elles présentent en effet des tenues mécaniques leur permettant d'être autoportées et d'accéder à des densités de pores élevées.

Les critères de choix resteront bien entendu la compatibilité chimique avec la couche formant une électrode réfléchissante, par exemple du métal, le polymère conducteur et l'électrolyte, mais également la porosité et une rugosité de surface faible permettant une réflectance spéculaire élevée.

Les membranes dont les pores sont réalisés par bombardement ionique semblent les plus adaptées. Elles présentent en effet une densité de pore suffisante pour obtenir de bonnes conductivités ioniques, mais, surtout, leur très faible rugosité de surface assure par exemple après métallisation une réflectance spéculaire pouvant dépasser 95% dans le proche infrarouge. Ceci n'exclut pas l'utilisation d'autres techniques pour réaliser les pores, par exemple celles exposée dans le document US 5,995,273.

Les inventeurs ont noté que la réduction de l'épaisseur de la ou des membrane(s) microporeuse(s) permet, outre de diminuer l'épaisseur globale du dispositif, de limiter la résistance entre les deux couches de polymères conducteurs et ainsi d'augmenter la vitesse de dopage/dédopage électrochimique du polymère conducteur et par conséquent de diminuer le temps de réponse optique.

Des membranes microporeuses Cyclopores (marque de commerce) de chez Whatman de 10 µm d'épaisseur et constituées de polyester présentent des rugosités de la taille des pores qui peuvent atteindre 0,1 µm, et des porosités de 4% suffisent à faire fonctionner électrochimiquement le dispositif. Par exemple, des réflectances spéculaires supérieures à 95% sont obtenues dans le moyen infrarouge pour de telles membranes microporeuses métallisées avec 50 nm d'or et des pores de diamètre 0,1 µm. Les mêmes membranes en polycarbonates peuvent être utilisées, en revanche, leur solubilité dans de nombreux milieux organiques les privilégient en milieux aqueux. D'autres types de membranes en nylon (marque de commerce), c'est-à-dire en polyamide, ou polyester, PVDF, peuvent également être utilisés. Elles présentent généralement des densités de pores plus importantes, mais en contre partie des rugosités plus importantes, ce qui limite la réflectance spéculaire, au profit du diffus.

Les inventeurs ont également remarqué que des densités de pores élevées des membranes microporeuses, c'est à dire supérieures à 100 000 pores/cm² et pouvant atteindre 10⁸ pores/cm², permettent d'augmenter les contacts entre électrolyte et polymère conducteur et ainsi limiter ou éliminer les problèmes de "mise en route" du dispositif rencontrés dans les dispositifs décrit par P. Chandrasekhar dans le document précité de l'art antérieur, mais également de réduire les temps de réponses. Ainsi, selon l'invention, les micropores de la membrane microporeuse ont avantageusement une densité supérieure à 100 000 pores/cm².

Selon l'invention, l'électrode réfléchissante est par exemple une couche de métal. Les métaux utilisables et leurs méthodes de dépôts en couches minces sont connues de l'homme du métier et ils ont déjà été largement décrits dans la technique en cause.

Si le domaine spectral visible est recherché, des métaux tels que l'argent ou le platine sont les plus appropriés. Mais pour obtenir de bonnes réflectances large bande et en particulier dans le domaine infrarouge (>90%), l'or est le métal le plus performant. De plus, l'or présente de remarquables propriétés d'élasticité, de stabilité électrochimique et est compatible avec les polymères conducteurs, les dopants et les électrolytes utilisés.

L'épaisseur minimale de la couche de métal permettra avantageusement d'obtenir la percolation permettant la conductivité et la réflectivité. Celle-ci se situe aux alentours de 40 nm pour l'or. Selon l'invention, l'électrode réfléchissante peut donc être une couche d'or ayant une épaisseur d'environ 40 nm.

Dans l'absolu, tout les polymères conducteurs peuvent convenir pour former la couche de polymère conducteur de la structure de la présente invention. De préférence, ceux présentant une bonne transparence infrarouge dans leur état oxydé ou réduit, des propriétés mécaniques suffisantes, un fort taux de dopage électrochimique, une bonne stabilité chimique et une cyclabilité importante sont préférés. La présence de plusieurs couleurs durant l'oxydation électrochimique peut également être d'un grand intérêt pour le domaine spectral visible.

La large palette des polymères conducteurs cités dans le document US 5,995,273 résume les polymères les plus appropriés actuellement recensés dans les laboratoires pour la présente invention.

Selon l'invention, la couche de polymère conducteur électrochrome peut comprendre par exemple un matériau choisi parmi la polyaniline, le polythiophène, et le polypyrrole et un dopant. De préférence, la couche de polymère conducteur électrochrome comprend un matériau choisi parmi la polydiphénylamine, le poly(4-amino biphényl), les poly (3-alkyl (C₁ à C₈) thiophènes), le polydiphényl benzidine), le polyphénylène, le poly(phénylène vinylène), un poly(allylène vinylène), un poly(aminoquinoline), le poly(3,4-éthylènedioxythiophène) et ses dérivés, ou des dérivés ou copolymères de ceux-ci et un dopant.

Des épaisseurs de quelques centaines de nanomètres, c'est-à-dire de 50 à 1 000 nm, de la couche de polymère conducteur suffisent à faire fonctionner le dispositif.

En tant que dopant, les sulfonates organiques largement utilisés dans le domaine des polymères conducteurs semblent les plus appropriés. L'utilisation de dopants polymériques sulfonés permet d'augmenter la tenue mécanique des polymères, surtout dans le cas de faibles masses moléculaires du polymère conducteur, et de favoriser, dans de nombreux cas, le contraste optique dans le domaine spectral infrarouge.

Selon l'invention, le dopant peut être choisi par exemple parmi le tosylate (p-toluènesulfonate), le naphtalène sulfonate, le dodécylbenzènesulfonate, le polystyrène sulfonate (PSS), le polyvinyle sulfonate (PVS), le polyanéthosulfonate, le poly(2-acrylamido-2-méthylpropanesulfonate) (PAMPS) etc...

Les sulfonates sont de préférence solubles dans le milieu de polymérisation choisi. Si ce n'est pas le cas, un échange de cations peut permettre la solubilité dans des solvants organiques moins polaires que l'eau. Les ammoniums quaternaires à chaîne alkyle assez longue sont bien appropriés pour cela.

Selon l'invention, l'électrolyte peut être aqueux ou solide, mais, de préférence, il garde des conductivités ioniques suffisantes. Le rôle de l'électrolyte est primordial dans le fonctionnement optique du dispositif dans le domaine infrarouge. L'important est le choix du couple dopant/électrolyte afin d'obtenir un contraste élevé dans le moyen infrarouge lors du processus de dopage/dédopage du polymère conducteur.

Selon l'invention, l'électrolyte peut être choisi sous la forme d'un solvant organique, tel que le carbonate de propylène, le diglyme, la butyrolactone, le carbonate d'éthylène, le diméthylcarbonate, ou bien encore un mélange de ces solvants. Au niveau des ions, les sulfonates cités plus hauts comme dopants sont fort bien appropriés, ainsi que des ions organiques tels que le bis((trifluorométhyl)sulfonyl)imide (TFSI) et les cations de la famille des imidazolium.

L'électrolyte peut également contenir des composés polymériques de façon à le gélifier comme par exemple des polyoxyde d'éthylène ou des polymères de la famille des polyacrylates.

Le choix des matériaux constituant la fenêtre souple et transparente dans le domaine spectral allant du visible au moyen infrarouge selon l'invention est limité. Il n'existe pas à l'heure actuelle de matériau souple permettant une très bonne transparence dans le moyen infrarouge. En effet, les seuls matériaux véritablement flexibles sont des polymères organiques qui présentent des bandes de vibration absorbantes dans le moyen infrarouge. Selon l'invention, les matériaux suivants conviennent pour constituer la fenêtre : un matériau choisi parmi le poly(éthylène téréphtalate) et autres polyester, le polyéthylène, le polypropylène, le poly(méthylmétacrylate), le poly(éthylmétacrylate), les résines acryliques telles que les résines synthétiques de méthylmétacrylate, les résines synthétiques d'acrylate, un polymère thermoplastique de type poly(méthylmétacrylate), un copolymère d'acrylate de méthyle et d'acrylonitrile, un acétate d'éthylène vinyle, une résine éthylène propylène fluorée, un poly(alkylène fluoré) en C₁ à C₈, un alcool polyvinylique et un poly(éthylène glycol), polychlorure de vinyle, ou un mélange de ceux-ci.

Parmi tous les polymères disponibles, les inventeurs ont noté que le polyéthylène présente la meilleure transparence dans le domaine infrarouge. Il exhibe de plus de bonnes propriétés mécaniques.

De façon à limiter l'absorption infrarouge du film constituant la fenêtre souple et transparente, son épaisseur est de préférence la plus faible possible, tout en gardant les propriétés de barrière vis à vis du milieu extérieur. En général, une épaisseur comprise entre 5 et 100 µm convient.

Dans l'exemple d'un film de polyéthylène basse densité, une épaisseur comprise entre 15 et 50 µm convient.

Dans la structure de la présente invention, les deux couches de polymère conducteur sont situées "à l'extérieur" du dispositif, hors du champ électrique créé par l'application d'un potentiel entre les deux électrodes métalliques. Et pourtant, de manière inattendue, la structure électrochrome fonctionne très bien électrochimiquement.

Dans le cas des dispositifs de P. Chandrasekhar décrits ci-dessus, seule la couche de polymère conducteur active se trouve hors du champ électrique. La partie contre-électrode est de type "classique".

La présente invention se rapporte également à des procédés de fabrication de la structure électrochrome de l'invention.

Un premier mode de fabrication de la structure électrochrome de la présente invention, comprend dans cet ordre les étapes suivantes :
-i- déposer sur les deux surfaces d'une membrane microporeuse une couche formant une électrode réfléchissante,
-ii- déposer une couche de polymère conducteur électrochrome sur chacune des couches formant une électrode réfléchissante déposées dans l'étape -i-,
-iii- déposer une fenêtre souple et transparente à des longueurs d'onde comprises entre 0,35 et 20 µm sur chacune des couches de polymère conducteur électrochrome déposées dans l'étape -ii-,
-iv- introduire un électrolyte dans la membrane microporeuse,
-v- sceller la structure électrochrome obtenue.

Un second mode de fabrication de la structure électrochrome de la présente invention comprend dans cet ordre les étapes suivantes :
-a- déposer sur l'une des deux surfaces d'une première membrane microporeuse et sur l'une des deux surfaces d'une deuxième membrane microporeuse, une couche formant une électrode réfléchissante, les autres surfaces des deux membranes microporeuses restant nues,
-b- déposer une couche de polymère conducteur électrochrome sur chacune des couches formant une électrode réfléchissante déposées dans l'étape -a-,
-c- déposer une fenêtre souple et transparente à des longueurs d'onde comprises entre 0,35 et 20 µm sur chacune des couches de polymère conducteur électrochrome déposées dans l'étape -b- de manière à obtenir deux demi-structures électrochromes,
-d- assembler les deux demi-structures électrochromes obtenues à l'étape -c- de manière à ce que les deux surfaces nues des deux membranes microporeuses soient l'une contre l'autre,
-e- introduire un électrolyte dans les membranes microporeuses des deux demi-structures assemblées à l'étape -d-, et
-f- sceller la structure électrochrome obtenue.

Les différents matériaux utilisables dans ces procédés sont décrits ci-dessus.

Selon l'invention, lorsque la couche formant l'électrode réfléchissante est une couche de métal, elle peut être déposée par exemple par un procédé de métallisation, par exemple au moyen d'un procédé d'évaporation thermique ou de pulvérisation magnétron. Ces procédés sont connus de l'homme du métier.

Selon l'invention, la couche de polymère conducteur est de préférence déposée par polymérisation électrochimique en milieu liquide comprenant le ou les monomère(s) correspondant au polymère à déposer, et le dopant. Selon l'invention, pour obtenir des polymères de meilleure qualité, des solvants organiques sont préférés à l'eau pour constituer le milieu liquide de l'électrodéposition lorsque le monomère est soluble à la fois dans le solvant organique et dans l'eau.

La fenêtre souple et transparente peut par exemple être déposée sur chacune des couches de polymère conducteur électrochrome par pressage à chaud, par exemple à 100°C pour une fenêtre en polyéthylène.

La présente invention se rapporte à une nouvelle conception de dispositifs électrochromes flexibles et large bande, visant à simplifier et faciliter l'assemblage des différentes composantes du système sans pour autant altérer les propriétés optiques recherchées.

Le premier mode de fabrication de la présente invention consiste donc à n'utiliser qu'un seul substrat poreux et à effectuer les mêmes opérations sur ses deux faces : d'abord le dépôt des couches formant électrode réfléchissante, par exemple par métallisation, puis dépôt des couches de polymère conducteur, par exemple par électrodéposition du polymère conducteur, et enfin, pose de la fenêtre souple, par exemple du film de polyéthylène par pressage, introduction de l'électrolyte et scellement de la structure.

Le deuxième mode de fabrication de la présente invention consiste schématiquement à fabriquer deux demi-structures exactement identiques à partir de deux substrats poreux, appelés ci-dessus première et deuxième membranes microporeuses, par les étapes -a- et -b-. La couche formant l'électrode réfléchissante est déposée sur une seule des deux surfaces de chacun des substrats, puis le polymère conducteur est déposé, par exemple électrochimiquement. Les deux demi-structures peuvent ensuite être assemblées surface nue contre surface nue des membranes microporeuses par pressage à chaud des deux fenêtres souples, constituées par exemple par deux films minces de polyéthylène, posées sur les deux couches de polymère conducteur. L'électrolyte peut ensuite être introduit dans les substrats poreux par un orifice spécialement laissé à cet effet. Le dispositif est ensuite scellé par exemple à chaud. Une autre possibilité d'assemblage est la pose de la fenêtre, par exemple du film de polyéthylène (PE), sur chaque demi-structure par exemple par pressage à chaud, puis l'assemblage des demi-structures, qui scelle par la même occasion le dispositif.

Selon l'invention, les étapes -c- et -d- peuvent donc être réalisées simultanément ou successivement.

Le dépôt des polymères conducteurs, par exemple électrochimique, peut donc être simultané et l'assemblage des composantes de la structure peut s'effectuer en une seule opération par simple pressage du multicouche entre les fenêtres souples, par exemple entre deux films de polyéthylène.

La simplicité d'assemblage est donc démontrée, même si chaque étape requiert une manipulation rigoureuse.

Les dispositifs obtenus permettent d'engendrer des contrastes importants en réflexion sur un large domaine spectral allant du visible jusqu'au moyen infrarouge, de 0,35 à 20 µm. Le design des structures de la présente invention étant totalement symétrique, la réalisation des différentes couches et leur assemblage sont grandement facilité, il permet de limiter le nombre des différentes étapes de réalisation et d'assemblage des composantes de ces systèmes électrochromes. En outre, la présente invention permet d'obtenir des dispositifs électrochromes flexibles de très faible épaisseur, inférieure à 100 µm, généralement comprises entre 80 et 500 µm, avec des temps de réponse optique très courts, inférieurs à 1 seconde. Les structures de la présente invention présentent en plus l'avantage de fonctionner sur leurs deux faces simultanément mais de façon inverse: un côté est réflecteur pendant que l'autre est absorbant, et inversement.

Le dispositif proposé par P. Chandrasekhar est complexe sur le plan de l'assemblage et ne permet pas d'obtenir les résultats précités. La présente invention facilite la construction des structures électrochromes, tout en ajoutant les nombreux avantages précités, notamment sur les épaisseurs et le fonctionnement double-face.

La structure de la présente invention peut être utilisée par exemple pour la fabrication d'afficheurs souples fonctionnant dans le domaine du visible et de l'infrarouge, et pour la fabrication de dispositifs de contrôle d'échanges thermiques, par exemple sur des objets spatiaux.

D'autres caractéristiques et avantages apparaîtront encore à l'homme du métier à la lecture des exemples suivants, donnés à titre illustratif et non limitatif, en référence aux dessins annexés.

### Brève description des figures

- La figure 1 est une représentation schématique du second mode de fabrication de la structure de la présente invention,
- la figure 2 est une représentation schématique d'une structure électrochrome de la présente invention, et
- la figure 3 est un graphique illustrant le contraste dans le domaine spectral infrarouge de la structure de la présente invention.

### Exemples

Les mesures de réflectance spéculaire sont effectuées sur un spectromètre infrarouge à transformée de Fourier, le faisceau incident ayant un angle de 7,5° par rapport à la normale, et la référence étant un miroir en or.

### Exemple 1

Les dispositifs réalisés ont une surface active carrée de 2,5x2,5 cm². Deux membranes microporeuses Cyclopores (marque de commerce), ayant un diamètre des pores de 0,1 µm, en polyester sont métallisées par pulvérisation avec 50 nm d'or. Un dépôt électrochimique de polymère conducteur est ensuite effectué successivement ou simultanément sur les deux membranes métallisées. Pour cela, une solution aqueuse saturée en 3,4-éthylènedioxythiophène (EDOT) contenant du poly(4-styrènesulfonate) de sodium (NaPVS) à la concentration de 0,1M (équivalent monomère). Le dépôt est effectué de manière galvanostatique avec une densité de courant de 0,5 mA/cm².

Après lavage à l'eau et à l'acétonitrile puis séchage du film, les membranes sont assemblées et encapsulées avec deux films de PEBD (polyéthylène basse densité) d'épaisseur 30 µm. Les deux membranes sont disposées dos à dos puis un film de PE est déposé sur les deux couches minces de polymère conducteur de chaque membrane. Le tout est ensuite pressé à chaud (120°C) pendant deux minutes.

Par un petit orifice préalablement laissé entre les deux films de PE, on introduit à la seringue l'électrolyte, en l'occurrence une solution aqueuse de NaPVS 0,1M. L'orifice est ensuite fermé par chauffage.

Le dispositif, ainsi scellé, est très flexible, mécaniquement résistant, d'épaisseur inférieure à 150 µm et exhibe un contraste infrarouge supérieur à 30% dans la bande III de l'infrarouge. Les inventeurs ont également remarqué la faible charge consommée lors de la transition réflecteur-absorbant qui était d'environ 1 mC/cm².

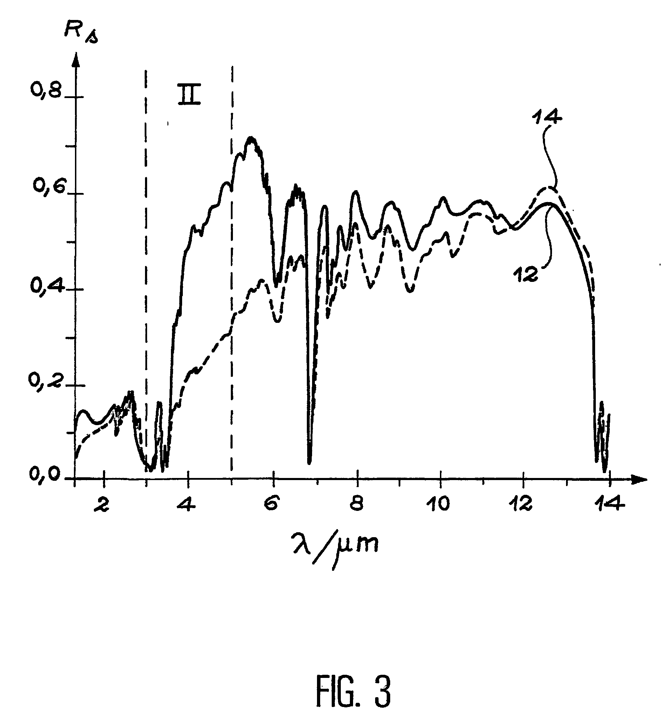

Du fait du PEDOT, un changement de couleur, de transparent-bleu pâle à bleu foncé, s'est produit lors du processus d'oxydoréduction. Le contraste dans le domaine spectral infrarouge est représenté sur le graphique de la figure 3. Sur cette figure, Rs indique la réflectance spéculaire ; λ/µm indique la longueur d'onde en micron ; la référence 12 indique la réflectance spéculaire au potentiel -1,4 V ; et la référence 14 indique la réflectance spéculaire au potentiel +1,4 V. On peut remarquer qu'il est particulièrement important en bande II de l'infrarouge (entre les lignes verticales pointillées sur la figure 3).

Par ailleurs, du fait de la symétrie du dispositif, celui-ci fonctionne optiquement sur ses deux faces de façon opposée, quand une face est réflectrice, l'autre est absorbante, et réciproquement.

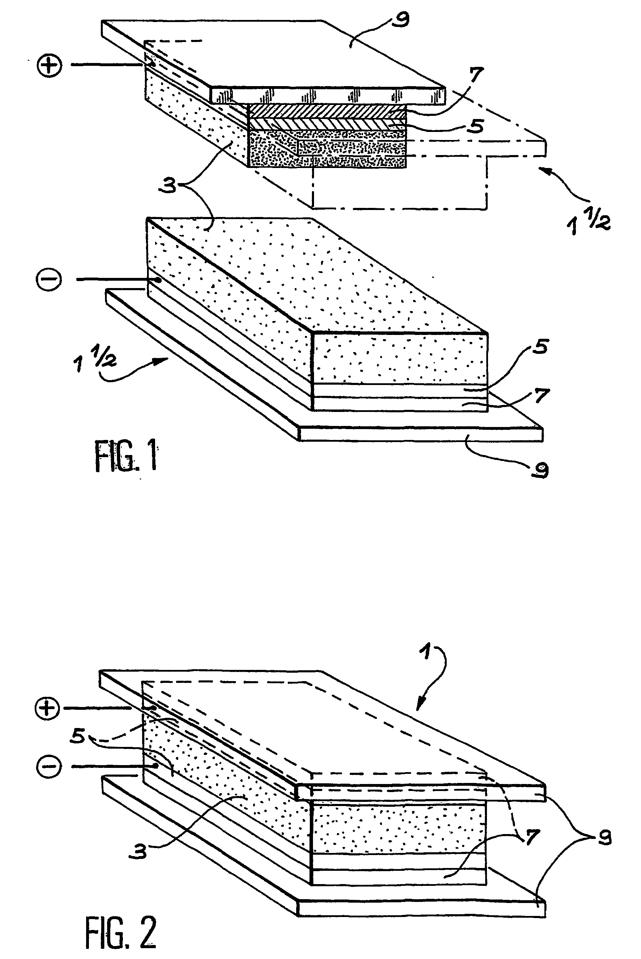

La figure 1 est une représentation schématique de cet exemple illustrant le second mode de fabrication de la structure de la présente invention. Sur cette figure, la référence 1^{1/2} indique une demi-structure selon l'invention ; la référence 3 indique la membrane microporeuse gorgée d'électrolyte ; la référence 5 indique la couche formant l'électrode réfléchissante, dans l'exemple présent il s'agit d'une couche d'or ; la référence 7 indique la couche de polymère conducteur ; et la référence 9 indique la fenêtre souple et transparente appelée aussi fenêtre optique.

### Exemple 2

Le dispositif est identique à l'exemple 1, le dopant et l'électrolyte étant différents.

Le poly(4-styrènesulfonate) de tosylate, qui était utilisé comme dopant et comme électrolyte est remplacé par le tétraéthylammonium de sodium (TEATOS). Le contraste visible de transparent-bleu pâle à bleu a également lieu.

En revanche contrairement à l'exemple 1, les inventeurs ont remarqué que les contrastes dans le proche infrarouge (NIR) et dans le moyen infrarouge (MIR) n'ont pas lieu "dans le même sens" : quand le dispositif est plus réflecteur dans le NIR, il est plus absorbant dans le MIR, et réciproquement.

Les remarques concernant la rapidité du système et les aspects double-face engendrés par la symétrie du dispositif restent les mêmes que pour l'exemple 1.

### Exemple 3

La technique d'assemblage reste la même que dans les exemples précédents, mais les matériaux utilisés sont différents.

Des membranes microporeuses Magna (marque de commerce), constituées de nylon (marque de commerce), ayant une taille de pores 0,1 µm, de porosité plus importante que les membranes Cyclopores des deux exemples précédents sont métallisées. Des films de polydiphénylamine (PDPA) sont électrochimiquement déposés à partir d'une solution d'acétonitrile contenant 0,1M de diphénylamine (DPA) et 0,1M de le poly(2-acrylamido-2-methylpropanesulfonate) de tétraéthylammonium (TEAPAMPS). L'électrolyte employé est une solution organique de diglyme (DG) contenant 1M de bis((trifluorométhyl)sulfonyl)imide de lithium (LiTFSI).

Dans le domaine visible, la polydiphénylamine exhibe plusieurs couleurs au cours de son oxydation électrochimique, passant de transparent-jaune pâle à vert, puis à bleu foncé. Dans le domaine spectral infrarouge, le contraste en réflectance atteint environ 40% en bande II (2-5 µm) et 30% en bande III (8-12 µm), le système montrant une bonne réflectance visible et infrarouge à l'état transparent (>50%).

On peut remarquer que les dispositifs ont un fonctionnement électrochrome sur chaque face, quand l'une est réflectrice, l'autre est absorbante et réciproquement. Ceci découle directement de la présente invention liée à la symétrie de la structure.

### Exemple 4

Les mêmes matériaux que dans les exemples 1 à 3 ont été utilisés sauf qu'une seule membrane microporeuse a été utilisée. Les dépôts successifs ont été réalisés suivant le premier mode de fabrication de la présente invention.

Les résultats obtenus dans cet exemple étaient sensiblement identiques à ceux des exemples précédents, avec les mêmes performances.

La figure 2 est une représentation schématique d'une structure électrochrome de la présente invention telle que celles obtenues dans cet exemple. Cette structure peut aussi être par exemple le résultat de l'assemblage des deux demi-structures présentée sur la figure 1. Les références identiques aux figures 1 et 2 indiquent les mêmes éléments. En outre, sur cette figure, la référence 1 indique la structure selon la présente invention.

## Revendications

1. Structure électrochrome flexible fonctionnant en réflexion à des longueurs d'onde comprises entre 0,35 et 20 µm comprenant une membrane microporeuse incluant un électrolyte et, déposées sur chacune des surfaces de la membrane microporeuse, de manière symétrique par rapport à ladite membrane, successivement et dans cet ordre : une électrode formée d'une couche conductrice électroniquement et réfléchissante, une couche de polymère conducteur électrochrome, et un film de protection flexible et transparent à des longueurs d'onde comprises entre 0,35 et 20 µm.

2. Structure électrochrome selon la revendication 1, dans laquelle la membrane microporeuse est constituée de deux demi-membranes microporeuses assemblées surface contre surface.

3. Structure selon la revendication 1, dans laquelle la membrane microporeuse est constituée d'un ou de plusieurs des matériaux suivants : un poly(propylène), un poly(éthylène téréphtalate), un poly(méthylméthacrylate), un poly(éthylmêthacrylate), un polytétrafluoroéthylène et autres poly(alkylènes) fluorés en C₁ à C₈, un polyamide, un poly(fluorure de vinylidène), une résine acrylique tel qu'une résine synthétique de méthylméthacrylate, une résine synthétique d'acrylate, et un polymère de type poly(méthylméthacrylate), un copolymère d'acrylate de méthyle et d'acrylonitrile, un acétate d'éthylène vinyle, une résine éthylène propylène fluorée, un polyester, un polycarbonate, un polybutylène, un poly(chlorure de vinyle), un polyuréthane, un polyimide, un textile tissé ou non tissé poreux, un papier, et un papier filtre, une membrane de microfiltration.

4. Structure selon la revendication 1, dans laquelle la membrane microporeuse est une membrane en polyamide, polyester, polycarbonate ou poly(fluorure de vinylidène).

5. Structure selon la revendication 1, dans laquelle les micropores ont une densité supérieure à 100 000 pores/cm².

6. Structure selon la revendication 1, dans laquelle les couches formant les électrodes réfléchissantes sont des couches de métal.

7. Structure selon la revendication 1, dans laquelle les électrodes réfléchissantes sont des couches d'un métal choisi parmi l'argent, le platine ou l'or.

8. Structure selon la revendication 1, dans laquelle les électrodes réfléchissantes sont des couches d'or.

9. Structure selon la revendication 1, dans laquelle les électrodes réfléchissantes sont des couches d'or ayant une épaisseur d'environ 40 nm.

10. Structure selon la revendication 1, dans laquelle les couches de polymère conducteur électrochrome comprennent un matériau choisi parmi la polyaniline, le polythiophène, et le polypyrrole et un dopant.

11. Structure selon la revendication 1, dans laquelle les couches de polymère conducteur électrochrome comprennent un matériau choisi parmi la polydiphénylamine, le poly(4-amino biphényl), les poly(3-alkyl(C₁ à C₈)thiophènes), le polydiphényl benzidine), le polyphénylène, le poly(phénylène vinylène), un poly(allylène vinylène), un poly(aminoquinoline), le poly(3,4-éthylènedioxythiophène) et ses dérivés, ou des dérivés ou copolymères de ceux-ci et un dopant.

12. Structure selon la revendication 10 ou 11, dans laquelle le dopant est un dopant polymérique sulfoné.

13. Structure selon la revendication 10 ou 11, dans laquelle le dopant est choisi le tosylate, le naphtalène sulfonate, le dodécylbenzènesulfonate, le polystyrène sulfonate, le polyvinyle sulfonate, le polyanéthosulfonate, le poly(2-acrylamido-2-méthylpropanesulfonate).

14. Structure selon la revendication 1, dans laquelle l'électrolyte est choisi parmi le carbonate de propylène, le diglyme, la butyrolactone, le carbonate d'éthylène, le diméthylcarbonate ou un mélange de ces solvants, un sulfonate, des ions organiques tels que le bis((trifluorométhyl)sulfonyl)imide et les cations de la famille des imidazolium.

15. Structure selon la revendication 1, dans laquelle le film de protection flexible et transparent est constitué d'un matériau choisi parmi le poly(éthylène téréphtalate) et autres polyester, le polyéthylène, le polypropylène, le poly(méthylmétacrylate), le poly(éthylmétacrylate), les résines acryliques telles que les résines synthétiques de méthylmétacrylate, les résines synthétiques d'acrylate, un polymère thermoplastique de type poly(méthylmétacrylate), un copolymère d'acrylate de méthyle et d'acrylonitrile, un acétate d'éthylène vinyle, une résine éthylène propylène fluorée, un poly(alkylène fluoré) en C₁ à C₈, un alcool polyvinylique et un poly(éthylène glycol), polychlorure de vinyle, ou un mélange de ceux-ci.

16. Structure selon la revendication 1, dans laquelle le film de protection flexible et transparent est constitué de polyéthylène.

17. Structure selon la revendication 1, dans laquelle le film de protection flexible et transparent est constitué d'un film de polyéthylène ayant une épaisseur comprise entre 15 et 50 µm.

18. Afficheur flexible comprenant une structure selon l'une quelconque des revendications 1 à 17.

19. Dispositif de contrôle d'échanges thermiques comprenant une structure selon l'une quelconque des revendications 1 à 17.

20. Procédé de fabrication d'une structure électrochrome flexible fonctionnant en réflexion à des longueurs d'onde comprises entre 0,35 et 20 µm comprenant dans cet ordre les étapes suivantes :
-i- déposer sur chacune des deux surfaces d'une membrane microporeuse une couche formant une électrode réfléchissante,
-ii- déposer une couche de polymère conducteur électrochrome sur chacune des couches formant une électrode réfléchissante déposées dans l'étape -i-,
-iii- déposer un film de protection flexible et transparent à des longueurs d'onde comprises entre 0,35 et 20 µm sur chacune des couches de polymère conducteur électrochrome déposées dans l'étape -ii-,
-iv- introduire un électrolyte dans la membrane microporeuse,
-v- sceller la structure électrochrome obtenue.

21. Procédé de fabrication d'une structure électrochrome flexible fonctionnant en réflexion à des longueurs d'onde comprises entre 0,35 et 20 µm comprenant dans cet ordre les étapes suivantes :
-a- déposer sur l'une des deux surfaces d'une première membrane microporeuse et sur l'une des deux surfaces d'une deuxième membrane microporeuse, une couche formant une électrode réfléchissante, les autres surfaces des deux membranes microporeuses restant nues,
-b- déposer une couche de polymère conducteur électrochrome sur chacune des couches formant une électrode réfléchissante déposées dans l'étape -a-,
-c- déposer un film de protection flexible et transparent à des longueurs d'onde comprises entre 0,35 et 20 µm sur chacune des couches de polymère conducteur électrochrome déposées dans l'étape -b- de manière à obtenir deux demi-structures électrochromes,
-d- assembler les deux demi-structures électrochromes obtenues à l'étape -c- de manière à ce que les deux surfaces nues des deux membranes microporeuses soient l'une contre l'autre,
-e- introduire un électrolyte dans les membranes microporeuses assemblées à l'étape -d-, et
-f- sceller la structure électrochrome obtenue.

22. Procédé selon la revendication 21, dans lequel les étapes -c- et -d- sont réalisées simultanément.

23. Procédé selon la revendication 21, dans lequel les étapes -c- et -d- sont réalisées successivement.

24. Procédé selon l'une quelconque des revendications 20 à 23, dans lequel les couches formant les électrodes réfléchissantes sont des couches de métal, et sont déposées par un procédé de métallisation.

25. Procédé selon la revendication 24, dans lequel le procédé de métallisation est un procédé d'évaporation thermique ou de pulvérisation magnétron.

26. Procédé selon l'une quelconque des revendications 20 à 23, dans lequel les couches de polymère conducteur sont déposées par polymérisation électrochimique en milieu liquide comprenant le ou les monomère(s) correspondant au polymère à déposer, et un dopant.

27. Procédé selon la revendication 26, dans lequel le milieu liquide est un solvant organique quand le ou les monomère(s) est (sont) soluble(s) dans les solvants organiques.

28. Procédé selon l'une quelconque des revendications 20 à 23, dans lequel le film de protection flexible et transparent est collé sur chacune des couches de polymère conducteur électrochrome par pressage à chaud.

## Patentansprüche

1. Flexible elektrochrome Struktur, die funktioniert auf der Basis der Reflexion von Wellen mit einer Länge zwischen 0,35 und 20 µm und umfasst eine mikroporöse Membran, die einen Elektrolyten enthält, wobei auf jeder der Oberflächen der mikroporösen Membran in symmetrischer Weise, bezogen auf die genannte Membran, aufeinanderfolgend und in der genannten Reihenfolge abgeschieden sind: eine Elektrode, gebildet aus einer elektronenleitenden und reflektierenden Schicht, eine Schicht aus einem elektrochromen leitenden Polymer und ein flexibler Schutzfilm, der für Wellen mit einer Länge zwischen 0,35 und 20 µm transparent ist.

2. Elektrochrome Struktur nach Anspruch 1, in der die mikroporöse Membran aus zwei mikroporösen Halbmembranen besteht, die so miteinander verbunden sind, dass ihre Oberflächen einander gegenüberliegen.

3. Struktur nach Anspruch 1, in der die mikroporöse Membran aus einem oder mehreren der folgenden Materialien besteht: einem Poly(propylen), einem Poly(ethylenterephthalat), einem Poly(methylmethacrylat), einem Poly(ethylmethacrylat), einem Polytetrafluorethylen und anderen fluorierten Poly(alkylenen) mit 1 bis 8 Kohlenstoffatomen, einem Polyamid, einem Poly(vinylidenfluorid), einem Acrylharz, wie z.B. einem synthetischen Methylmethacrylatharz, einem synthetischen Acrylatharz und einem Polymer vom Poly(methylmethacrylat)-Typ, einem Copolymer von Methylacrylat und Acrylnitril, einem Ethylenvinylacetat, einem fluorierten Ethylenpropylenharz, einem Polyester, einem Polycarbonat, einem Polybutylen, einem Poly(vinylchlorid), einem Polyurethan, einem Polyimid, einem porösen gewebten oder nicht-gewebten Gewebe (Textilmaterial), einem Papier und einem Filterpapier, einer Mikrofiltrationsmembran.

4. Struktur nach Anspruch 1, in der die mikroporöse Membran eine Membran aus Polyamid, Polyester, Polycarbonat oder Poly(vinylidenfluorid) ist.

5. Struktur nach Anspruch 1, in der die Mikroporen eine Dichte von mehr als 100 000 Poren/cm² haben.

6. Struktur nach Anspruch 1, in der die Schichten, welche die reflektierenden Elektroden bilden, Metallschichten sind.

7. Struktur nach Anspruch 1, in der die reflektierenden Elektroden Schichten aus einem Metall, ausgewählt aus der Gruppe Silber, Platin oder Gold, sind.

8. Struktur nach Anspruch 1, in der die reflektierenden Elektroden Schichten aus Gold sind.

9. Struktur nach Anspruch 1, in der die reflektierenden Elektroden Schichten aus Gold sind, die eine Dicke von etwa 40 nm haben.

10. Struktur nach Anspruch 1, in der die Schichten aus dem elektrochromen leitenden Polymer ein Material, ausgewählt aus der Gruppe Polyanilin, Polythiophen und Polypyrrol, sowie ein Dotierungsmittel umfassen.

11. Struktur nach Anspruch 1, in der die Schichten aus dem elektrochromen leitenden Polymer ein Material, ausgewählt aus der Gruppe Polydiphenylamin, Poly(4-aminobiphenyl), der Poly(3-alkyl-(C₁-C₈)-thiophene), Polydiphenylbenzidin, Polyphenylen, Poly(phenylenvinylen), Poly(allylenvinylen), Poly(aminochinolin), Poly-(3,4-ethylendioxythiophen) und ihren Derivaten oder Derivaten oder Copolymeren derselben, sowie ein Dotierungsmittel umfassen.

12. Struktur nach Anspruch 10 oder 11, in der das Dotierungsmittel ein sulfoniertes polymeres Dotierungsmittel ist.

13. Struktur nach Anspruch 10 oder 11, in der das Dotierungsmittel ausgewählt ist aus der Gruppe Tosylat, Naphthalinsulfonat, Dodecylbenzolsulfonat, Polystyrolsulfonat, Polyvinylsulfonat, Polyanethosulfonat, Poly(2-acryl-amido-2-methylpropansulfonat).

14. Struktur nach Anspruch 1, in der der Elektrolyt ausgewählt ist aus der Gruppe Propylencarbonat, Diglyme, Butyrolacton, Ethylencarbonat, Dimethylcarbonat oder einer Mischung dieser Lösungsmittel, einem Sulfonat, organischen Ionen, wie z.B. Bis((trifluormethyl)sulfonyl)imid und Kationen der Imidazolium-Familie.

15. Struktur nach Anspruch 1, in welcher der flexible und transparente Schutzfilm besteht aus einem Material, ausgewählt aus der Gruppe Po-Iy(ethylenterephthalat) und anderen Polyestern, Polyethylen, Polypropylen, Poly(methylmethacrylat), Poly(ethylmethacrylat), den Acrylharzen, wie z.B. den synthetischen Methylmethacrylat-Harzen, den synthetischen Acrylatharzen, einem thermoplastischen Polymer vom Poly(methylmethacrylat)-Typ, einem Copolymer von Methylacrylat und Acrylnitril, einem Ethylenvinylacetat, einem fluorierten Ethylenpropylen-Harz, einem fluorierten Poly(alkylen) mit 1 bis 8 Kohlenstoffatomen, Polyvinylalkohol und Poly(ethylenglycol), Polyvinylchlorid oder einer Mischung derselben.

16. Struktur nach Anspruch 1, in welcher der flexible und transparente Schutzfilm aus Polyethylen besteht.

17. Struktur nach Anspruch 1, in welcher der flexible und transparente Schutzfilm aus einem Polyethylenfilm mit einer Dicke zwischen 15 und 50 µm besteht.

18. Flexible Anzeige, die eine Struktur nach einem der Ansprüche 1 bis 17 umfasst.

19. Vorrichtung zur Kontrolle von Wärmeaustausch-Vorgängen, die eine Struktur nach einem der Ansprüche 1 bis 17 umfasst.

20. Verfahren zur Herstellung einer flexiblen elektrochromen Struktur, die funktioniert auf der Basis der Reflexion von Wellen mit einer Länge zwischen 0,35 und 20 µm, wobei das Verfahren die nachstehend angegebenen Stufen in der genannten Reihenfolge umfasst:
i) Abscheidung einer Schicht, die eine reflektierende Elektrode bildet, auf jeder der beiden Oberflächen einer mikroporösen Membran,
ii) Abscheidung einer Schicht aus einem elektrochromen leitenden Polymer auf jeder der in der Stufe (i) abgeschiedenen Schichten, die eine reflektierende Elektrode bilden,
iii) Abscheidung eines flexiblen Schutzfilms, der für Wellen mit einer Länge zwischen 0,35 und 20 µm transparent ist, auf jeder der in der Stufe (ii) abgeschiedenen Schichten aus einem elektrochromen leitenden Polymer,
iv) Einführung eines Elektrolyten in die mikroporöse Membran und
v) Versiegeln der erhaltenen elektrochromen Struktur.

21. Verfahren zur Herstellung einer flexiblen elektrochromen Struktur, die funktioniert auf der Basis der Reflexion von Wellen mit einer Länge zwischen 0,35 und 20 µm, wobei das Verfahren die folgenden Stufen in der genannten Reihenfolge umfasst:
a) Abscheidung einer Schicht, die eine reflektierende Elektrode bildet, auf einer der beiden Oberflächen einer ersten mikroporösen Membran und auf einer der beiden Oberflächen einer zweiten mikroporösen Membran, wobei die anderen Oberflächen der beiden mikroporösen Membranen unbeschichtet bleiben,
b) Abscheidung einer Schicht aus einem elektrochromen leitenden Polymer auf jeder der in der Stufe (a) abgeschiedenen Schichten, die eine reflektierende Elektrode bilden,
c) Abscheidung eines flexiblen Schutzfilms, der für Wellen mit einer Länge zwischen 0,35 und 20 µm transparent ist, auf jeder der in der Stufe (b) abgeschiedenen Schichten aus einem elektrochromen leitenden Polymer in der Weise, dass zwei elektrochrome Halbstrukturen erhalten werden,
d) Zusammenfügen der in der Stufe (c) erhaltenen beiden elektrochromen Halbstrukturen in der Weise, dass die beiden unbeschichteten Oberflächen der beiden mikroporösen Membranen aufeianderliegen,
e) Einführen eines Elektrolyten in die in der Stufe (d) zusammengefügten mikroporösen Membranen und
f) Versiegeln der erhaltenen elektrochromen Struktur.

22. Verfahren nach Anspruch 21, bei dem die Stufen (c) und (d) gleichzeitig durchgeführt werden.

23. Verfahren nach Anspruch 21, bei dem die Stufen (c) und (d) nacheinander durchgeführt werden.

24. Verfahren nach einem der Ansprüche 20 bis 23, bei dem die Schichten, welche die reflektierenden Elektroden bilden, Metallschichten sind und unter Anwendung eines Metallisierungsverfahrens abgeschieden werden.

25. Verfahren nach Anspruch 24, bei dem das Metallisierungsverfahren ein thermisches Bedampfungsverfahren oder ein Magnetron-Zerstäubungsverfahren ist.

26. Verfahren nach einem der Ansprüche 20 bis 23, bei dem die Schichten aus dem leitenden Polymer durch elektrochemische Polymerisation in einem flüssigen Medium, welches das (die) dem abzuscheidenden Polymer entsprechende(n) Monomer(en) und ein Dotierungsmittel enthält, abgeschieden werden.

27. Verfahren nach Anspruch 26, bei dem das flüssige Medium ein organisches Lösungsmittel ist, wenn das (die) Monomer(en) in einem organischen Lösungsmittel löslich ist (sind).

28. Verfahren nach einem der Ansprüche 20 bis 23, bei dem der flexible und transparente Schutzfilm auf jede der Schichten aus dem elektrochromen leitenden Polymer durch Warmpressen aufgeklebt wird.

## Claims

1. Flexible electrochrome structure operating in reflection at wavelengths between 0.35 and 20 µm comprising a microporous membrane including an electrolyte and, deposited on each of the surfaces of the microporous membrane, in a symmetrical manner in relation to said membrane, successively and in this order: an electrode formed from a reflecting and electronically conductive layer, a layer of electrochrome conductive polymer and a flexible protection film transparent to wavelengths between 0.35 and 20 µm.

2. Electrochrome structure according to claim 1, in which the microporous membrane is composed of two microporous semi-membranes assembled surface against surface.

3. Structure according to claim 1, in which the microporous membrane is composed of one or several of the following materials: a poly(propylene), a poly(ethylene terephthalate), a poly(methyl methacrylate), a poly(ethyl methacrylate), a polytetrafluoroethylene and other C₁ to C₈ fluorinated poly(alkylenes), a polyamide, a poly(vinylidene fluoride), an acrylic resin such as a synthetic methyl methacrylate resin, a synthetic acrylate resin, and a poly(methyl methacrylate) type polymer, a methyl acrylate and acrylonitrile copolymer, an ethylene vinyl acetate, a fluorinated ethylene propylene resin, a polyester, a polycarbonate, a polybutylene, a poly(vinyl chloride), a polyurethane, a polyimide, a porous woven or non-woven textile, a paper, and a paper filter, a microfiltration membrane.

4. Structure according to claim 1, in which the microporous membrane is a membrane in polyamide, polyester, polycarbonate or poly(vinylidene fluoride).

5. Structure according to claim 1, in which the micropores have a density greater than 100,000 pores/cm².

6. Structure according to claim 1, in which the layers forming the reflecting electrode are metal layers.

7. Structure according to claim 1, in which the reflecting electrodes are metal layers chosen from silver, platinum or gold.

8. Structure according to claim 1, in which the reflecting electrodes are gold layers.

9. Structure according to claim 1, in which the reflecting electrodes are gold layers with a thickness of around 40 nm.

10. Structure according to claim 1, in which the electrochrome conductive polymer layers comprise a material chosen from among polyaniline, polythiophene and polypyrrole and a dopant.

11. Structure according to claim 1, in which the electrochrome conductive polymer layers comprise a material chosen from among polydiphenylamine, poly(4-amino biphenyl), poly(3-alkyl) (C₁ to C₈) thiophenes, polydiphenyl benzidine, polyphenylene, poly(phenylene vinylene), a poly(allylene vinylene), a poly(amino quinoline), poly(3,4-ethylenedioxy thiophene) and its derivatives, or derivatives or copolymers of these and a dopant.

12. Structure according to claim 10 or 11, in which the dopant is a sulphonated polymeric dopant.

13. Structure according to claim 10 or 11, in which the dopant is chosen from among tosylate, naphthalene sulphonate, dodecylbenzene sulphonate, polystyrene sulphonate, polyvinyl sulphonate, polyanetho sulphonate, poly(2-acrylamido-2-methylpropane sulphonate).

14. Structure according to claim 1, in which the electrolyte is chosen from among propylene carbonate, diglyme, butyrolactone, ethylene carbonate, dimethyl carbonate or a mixture of these solvents, a sulphonate, organic ions such as bis((trifluoromethyl) sulphonyl) imide and cations from the imidazolium family.

15. Structure according to claim 1, in which the flexible, transparent protection film is composed of a material chosen from among poly(ethylene terephthalate) and other polyesters, polyethylene, polypropylene, poly(methyl methacrylate), poly(ethyl methacrylate), acrylic resins such as synthetic methyl methacrylate resins, synthetic acrylate resins, a poly(methyl methacrylate), type thermoplastic polymer, a copolymer of methyl acrylate and acrylonitrile, an ethylene vinyl acetate, a fluorinated ethylene propylene resin, a C₁ to C₈ fluorinated poly(alkylene), a polyvinylic alcohol and a poly(ethylene glycol), polyvinyl chloride, or a mixture of these.

16. Structure according to claim 1, in which the flexible, transparent protection film is composed of polyethylene.

17. Structure according to claim 1, in which the flexible, transparent protection film is composed of a film of polyethylene having a thickness of between 15 and 50 µm.

18. Flexible display device comprising a structure according to any of claims 1 to 17.

19. Heat exchange control device comprising a structure according to any of claims 1 to 17.

20. Method for manufacturing a flexible electrochrome structure operating in reflection at wavelengths between 0.35 and 20 µm comprising, in this order, the following steps:
i. depositing on each of the two surfaces of a microporous membrane a layer forming a reflecting electrode,
ii. depositing a layer of electrochrome conductive polymer on each of the layers forming a reflecting electrode deposited in step i.,
iii. depositing a flexible protection film transparent to wavelengths between 0.35 and 20 µm on each of the layers of electrochrome conductive polymer deposited in step ii.,
iv. introducing an electrolyte into the microporous membrane,
v. sealing the electrochrome structure thus obtained.

21. Method for manufacturing a flexible electrochrome structure operating in reflection at wavelengths between 0.35 and 20 µm comprising, in this order, the following steps:
a. depositing on one of the two surfaces of a first microporous membrane and on one of the two surfaces of a second microporous membrane, a layer forming a reflecting electrode, the other surfaces of the two microporous membranes remaining bare,
b. depositing a layer of electrochrome conductive polymer on each of the layers forming a reflecting electrode depositing in step a.,
c. depositing a flexible protection film transparent to wavelengths between 0.35 and 20 µm on each of the layers of electrochrome conductive polymer deposited in step b. in such a way as to obtain two electrochrome semi-structures,
d. assembling the two electrochrome semi-structures obtained in step c. in such a way that the two bare surfaces of the two microporous membranes are one against the other,
e. introducing an electrolyte into the microporous membranes assembled in step d., and
f. sealing the electrochrome structure thus obtained.

22. Method according to claim 21, in which steps. c. and d. are carried out simultaneously.

23. Method according to claim 21, in which steps c. and d. are carried out successively.

24. Method according to any of claims 20 to 23, in which the layers forming reflecting electrodes are metal layers deposited by a metallisation process.

25. Method according to claim 24, in which the metallisation process is a thermal evaporation process or a magnetron sputtering process.

26. Method according to any of claims 20 to 23, in which the conductive polymer layers are deposited by electrochemical polymerisation in a liquid medium comprising the monomer(s) corresponding to the polymer to be deposited, and a dopant.

27. Method according to claim 26, in which the liquid medium is an organic solvent when the monomer(s) is (are) soluble in organic solvents.

28. Method according to any of claims 20 to 23, in which the flexible, transparent protection film is bonded to each of the layers of electrochrome conductive polymer by hot press moulding.
